# EUROPÄISCHE PATENTSCHRIFT

(11) **EP 2 567 874 B1**
(45) Veröffentlichungstag und Bekanntmachung des Hinweises auf die Patenterteilung: **22.07.2015**
(21) Anmeldenummer: 12183644.9
(22) Anmeldetag: 10.09.2012
(51) Int. Cl.: B60T 13/26, B60T 13/38, B60T 15/04, B60T 15/60

(54) **Ventilbaugruppe für eine Anhängerbremsanlage**
Valve assembly for a trailer braking assembly
Composant de soupape pour une installation de freinage d'une remorque

(30) Priorität: 12.09.2011 DE 102011053529
(43) Veröffentlichungstag der Anmeldung: 13.03.2013
(73) Patentinhaber: Haldex Brake Products GmbH, 69123 Heidelberg (DE)
(72) Erfinder: Sulzyc, Georg, 68305 Mannheim (DE); Engel, Georg, 69181 Leimen (DE); Maltry, Helmut, 69226 Nussloch (DE)
(74) Vertreter: REHBERG HÜPPE + PARTNER

(56) Entgegenhaltungen:
- DE-A1- 3 844 382
- DE-A1- 19 854 881
- DE-B4-102007 053 764

## Beschreibung

### TECHNISCHES GEBIET DER ERFINDUNG

Die Erfindung betrifft eine Ventilbaugruppe für eine Anhängerbremsanlage eines Nutzfahrzeugs. Darüber hinaus betrifft die Erfindung eine Anhängerbremsanlage mit einer derartigen Ventilbaugruppe.

### STAND DER TECHNIK

DE 697 05 978 T2 offenbart eine Anhängerbremsanlage mit mehreren singulären Ventileinheiten, welche über pneumatische Leitungen miteinander gekoppelt sind. Betriebsbremskammern von Kombi-Bremszylindern werden nach Maßgabe eines Bremssteuerdrucks von einem Kupplungskopf Bremse, der als Steuerdruck auf ein Relaisventil einwirkt, beaufschlagt. Zwischen den Kupplungskopf Bremse und Relaisventil ist ein Niveauregelventil zwischengeschaltet, welches eine beladungsabhängige Anpassung des Bremssteuerdrucks vornimmt. Das Relaisventil wird mit Druckluft versorgt, welches je nach Stellung eines Löseventils einem Kupplungskopf Vorrat oder einem Behälter entstammt. Das Löseventil nimmt bei angeschlossenem Kupplungskopf Vorrat automatisiert eine Stellung ein, in welcher das Relaisventil mit Druckluft von dem Kupplungskopf Vorrat versorgt wird. Im Fall des Abkuppelns des Kupplungskopfs Vorrat, eines Leitungsabrisses u. ä. kann das Löseventil manuell in die andere Betriebsstellung umgeschaltet werden, in welcher das Relaisventil mit Druckluft aus dem Behälter versorgt wird, so dass für ein Rangieren des Anhängers durch dieses Umschalten und den Druck des Behälters simuliert werden kann, dass der Kupplungskopf Vorrat an ein Zugfahrzeug angeschlossen ist. Das Relaisventil beinhaltet eine Notbremsfunktion, welche zur Folge hat, dass ein Druckabfall am Kupplungskopf Vorrat oder ein Leitungsabriss zur Folge hat, dass die Betriebsbremsen der Kombi-Bremszylinder für eine Notbremsung betätigt werden. Zusätzlich zu dem Löseventil kann mittels eines Parkventils manuell auf die Anhängerbremsanlage eingewirkt werden. Das Parkventil ist über ein Wechselventil und ein Schnelllöseventil mit Federspeicher-Bremskammern der Kombi-Bremszylinder verbunden ist. Ein Eingang des Wechselventils ist hierbei mit dem Parkventil verbunden, während ein anderer Eingang des Wechselventils mit dem Relaisventil verbunden ist und mit dem Druck beaufschlagt wird, welcher in den Betriebsbremskammern der Kombi-Bremszylinder wirkt. Der Ausgang des Wechselventils ist mit einem Steueranschluss des Schnelllöseventils verbunden. Über das manuell betätigbare Parkventil kann gezielt eine Be- und Entlüftung der Federspeicher-Bremskammern erfolgen, so dass über die Federspeicher-Feststellbremsen eine Parkbremskraft herbeigeführt und beseitigt werden kann. Das genannte Wechselventil verhindert hierbei eine Bremskraftaddition an den Kombi-Bremszylindern durch gleichzeitige Beaufschlagung der Betriebsbremskammern und der Federspeicher-Bremskammern. DE 697 05 978 T2 erläutert die Probleme und Gefahren welche sich ergeben, wenn das Parkventil nur durch manuelle Betätigung in die Parkstellung mit einer Entlüftung der Federspeicher-Bremskammern überführt werden kann, was mit dem ungewollten Wegrollen des gesamten Fahrzeugszugs oder dem unkontrollierten Anrollen nur des Anhängers verbunden sein kann, womit der Fahrer zwischen Zugmaschine und Anhänger eingeklemmt werden kann, was schlimmstenfalls tödlich endet. Vor diesem Hintergrund schlägt DE 697 05 978 T2 vor, das Parkventil automatisch in die Parkstellung mit entlüfteten Federspeicher-Bremskammern zu überführen, wenn der Kupplungskopf Vorrat drucklos ist, insbesondere infolge eines Abkoppelns der Zugmaschine. Hierzu wird ein Ventilkörper des Parkventils in eine zweite Ventilstellung beaufschlagt, in welcher der mit den Federspeicher-Bremskammern verbundene Anschluss des Parkventils mit einer Entlüftung verbunden ist. Für bis auf die Feder kraftfreien Ventilkörper wird somit automatisiert die Parkstellung des Parkventils eingenommen. Hingegen kann unter Beaufschlagung der Feder eine erste Ventilstellung herbeigeführt werden, in welcher der Anschluss des Parkventils, der mit den Federspeicher-Bremskammern verbunden ist, mit einem Anschluss verbunden wird, der mit einem Behälter des Anhängers verbunden ist. Bei hinreichender Befüllung des Behälters mit Druckluft belüftet somit das Parkventil in der ersten Ventilstellung die Federspeicher-Bremskammern. Die erste Ventilstellung kann durch gegen die Feder wirkende Stellkräfte herbeigeführt werden. Das Parkventil besitzt einen weiteren Anschluss, welcher mit dem Kupplungskopf Vorrat gekoppelt ist. Dieser Anschluss ist derart mit dem Ventilkörper pneumatisch verbunden, dass in der zweiten Ventilstellung an dem Kupplungskopf Vorrat anliegender Druck keine Stellkraft auf den Ventilkörper ausübt, während in der ersten Ventilstellung der an dem Kupplungskopf Vorrat anliegende Druck auf eine dem Ventilkörper zugeordnete Kolbenfläche zur Erzeugung der gegen die Feder wirkenden Stellkraft einwirkt. Befindet sich der Ventilkörper in der zweiten Ventilstellung, welche hier einer Parkstellung entspricht, kann infolge der druckausgeglichenen Einwirkung des Drucks an dem Kupplungskopf Vorrat das Lösen des Parkventils nur möglich sein, wenn manuelle Stellkräfte auf das Betätigungsorgan des Parkventils aufgebracht werden. In der derart herbeigeführten ersten Ventilstellung, welche mit gelöster Parkbremse korreliert, wirkt der Druck an dem Kupplungskopf Vorrat derart auf die Kolbenfläche des Ventilkörpers ein, dass diese Stellung beibehalten wird, ohne dass die Feder den Ventilkörper bei Entfall der manuellen Betätigungskräfte wieder in die zweite Ventilstellung zurückschieben kann. Allerdings hat der Einbruch des Drucks an dem Kupplungskopf Vorrat infolge eines Abkuppelns des Anhängers zur Folge, dass die Stellkraft, die an der Kolbenfläche erzeugt wird, entfällt, wodurch die Feder automatisch den Ventilkörper von der ersten Ventilstellung in die zweite Ventilstellung überführt. Somit wird ermöglicht, dass zur Betätigung der Parkbremsen mit dem Abkoppeln des Zugfahrzeugs nicht manuell das Betätigungsorgan vom Fahrer betätigt werden muss. Es versteht sich, dass über manuelles Einwirken des Fahrers auf das Betätigungsorgan auch bei abgekuppeltem Zugfahrzeug die Parkbremse gelöst werden kann. Ein Rangieren des Anhängers ohne Zugfahrzeug erfordert aber, dass der Fahrer sowohl das Löseventil betätigt als auch für die Dauer des Rangiervorgangs die Stellkraft auf das Parkventil aufbringt, um dieses in der ersten Ventilstellung zu halten.

Die Patente DE 10 2007 053 764 B4 und DE 10 2007 053 767 B3 beschreiben zunächst, dass die Ausstattung sowohl des Relaisventils als auch des Parkventils mit einer pneumatischen Betätigungseinheit, welche die Umschaltung des Relaisventils bzw. des Parkventils herbeiführt für einen drucklosen Kupplungskopf Vorrat problematisch sein kann, wenn eine Notbremssituation vorliegt, in welcher sowohl das Anhängerbremsventil die Betriebsbremsen automatisiert betätigt als auch das Parkventil die zweite Ventilstellung einnimmt, wodurch insbesondere eine geregelte EBS-Bremsung beeinträchtigt sein kann. Die genannten Patente der Anmelderin schlagen Maßnahmen vor, um für sich bewegendes Kraftfahrzeug in einer Notbremssituation mit Verringerung oder Entfall des Drucks an einem Kupplungskopf Vorrat die automatische Entlüftung der Federspeicher-Bremskammern durch das Parkventil zu verhindern, womit ein geregelter Bremsvorgang über die Betriebsbremszylinder ermöglicht werden soll. Andererseits wird eine Modifikation des Parkventils derart vorgeschlagen, dass das Parkventil lediglich in der ersten Ventilstellung verbleibt, wenn eine Luftfederungsanlage des Nutzfahrzeugs in betriebsbereitem Zustand ist, nämlich eine Luftfederung ordnungsgemäß befüllt ist.

DE 37 03 536 A1 offenbart ein Umschaltventil mit einem einzigen manuellen Betätigungsorgan, welches mit einem Ventilkörper in Ausbildung als Steuerschieber gebildet ist. Für angekup pelten Kupplungskopf Vorrat und ohne Eintritt einer Notbremssituation kann der Steuerschieber manuell zwischen einer ersten Ventilstellung und einer zweiten Ventilstellung hin- und hergeschoben werden zur Be- und Entlüftung einer Federspeicher-Feststellbremse. Bricht hingegen der Druck infolge eines Abkuppelns des Anhängers oder in einer Notbremssituation an dem Versorgungsanschluss des Umschaltventils ein, wird der Ventilkörper automatisch in die zweite Ventilstellung überführt, in welcher die Federspeicher-Feststellbremse betätigt wird durch Entlüftung eines Federspeicheranschlusses des Umschaltventils. Dieses automatische Umschalten erfolgt über einen Notbremskolben, welcher verschieblich gegenüber dem Ventilkörper geführt ist. Für das automatische Umschalten kommt der Notbremskolben zur Anlage an einen Sicherungsring des Ventilkörpers, so dass die Bewegung des Notbremskolbens mit der Bewegung des Ventilkörpers gekoppelt ist und der Notbremskolben den Ventilkörper von der ersten Ventilstellung in die zweite Ventilstellung mitnimmt. Für abgekuppelten Anhänger oder nach einer Notbremsung kann ein Rangieren des Anhängers erfolgen, indem der Ventilkörper von der zweiten Ventilstellung in eine von der ersten Ventilstellung abweichende dritte Ventilstellung überführt. Eine Bedienung des Umschaltventils mit drei möglichen Ventilstellungen und damit auch drei unterschiedlichen Stellungen des Betätigungsorgans ist umständlich, da der Ventilkörper und damit das Betätigungsorgan für ein Rangieren des Anhängers unterschiedliche Ventilstellungen erfordert je nach dem, ob der Versorgungsanschluss druckbeaufschlagt ist oder nicht. Des Weiteren ist unter Umständen die gleitende Führung des Notbremskolbens auf dem Ventilkörper aufwendig und erfordert einen großen Einbauraum.

DE 19 42 066 A1 offenbart eine Anhängerbremsanlage, bei welcher kumulativ ein Parkventil, hier ein stufbares Handbremsventil, und ein manuell betätigbares Schaltventil Einsatz finden.

DE 38 44 382 offenbart eine Ventileinordnung für ein Not- und Feststell-Bremssystem, bei welchem ein Steuerhebel manuell betätigt wird. Weiterer Stand der Technik ist aus DE 10 2008 018 470 A1, DE 24 35 243 B2 und DD 76 396 B3 bekannt.

### AUFGABE DER ERFINDUNG

Der Erfindung liegt die Aufgabe zugrunde, eine vereinfachte Ventilbaugruppe für eine Anhängerbremsanlage eines Nutzfahrzeugs sowie eine Anhängerbremsanlage mit einer derartigen Ventilbaugruppe vorzuschlagen, welche einfach und kompakt ausgebildet ist, eine Notbrems- und/oder Abkuppelfunktion gewährleistet und/oder die manuelle Betätigung durch den Fahrer vereinfacht, ohne dass die Betriebssicherheit beeinträchtigt ist.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung betrifft eine Ventilbaugruppe für eine Anhängerbremsanlage eines Nutzfahrzeugs, wobei diese Ventilbaugruppe
- mit mehreren singulären Bauelementen ausgebildet sein kann, welche über Leitungsverbindungen miteinander verbunden sind,
- mit einem gemeinsamen Gehäuse als eine singuläre Baueinheit ausgebildet sein kann oder auch
- modular ausgebildet sein kann, wobei einzelne Module ineinander oder in ein gemeinsames Gehäuse eingesetzt sein können oder aneinander angeflanscht sein können.

Die erfindungsgemäße Ventilbaugruppe verfügt über einen Versorgungsanschluss, über welchen diese mit Druckluft, vorzugsweise über einen Kupplungskopf Vorrat von dem Zugfahrzeug, mit Druckluft versorgt wird. Des Weiteren verfügt die Ventilbaugruppe über einen Federspeicheranschluss, welcher unmittelbar oder mittelbar mit mindestens einer Federspeicher-Feststellbremse verbunden ist. Über ein manuelles Betätigungsorgan kann ein Benutzer willkürlich auf einen Betriebszustand der Ventilbaugruppe einwirken. In die Ventilbaugruppe ist eine Notbremsfunktion und/oder eine Abkuppelfunktion integriert. Die Notbremsfunktion dient der Herbeiführung einer Notbremsung, wenn der Versorgungsanschluss nicht oder nicht ausreichend mit Druckluft versorgt wird, insbesondere für den Fall eines Abrisses des Kupplungskopfs Vorrat oder der zugeordneten Versorgungsleitung. Die Abkuppelfunktion führt ebenfalls zu einer automatisierten Bremsbetätigung, wenn der Anhänger von dem Zugfahrzeug abgekoppelt wird.

In der europäischen Norm ECE R 13 ist hinsichtlich der Anhängerbremsanlagen das Folgende vorgeschrieben:
*"Bei allen Anhängern, die mit einer Betriebsbremsanlage ausgerüstet sein müssen, muss die Feststellbremsung auch dann sichergestellt werden können, wenn der Anhänger vom Zugfahrzeug getrennt ist. Die Feststellbremsanlage muss von einer am Fahrzeug stehenden Person betätigt werden können ... Der Ausdruck "betätigen" umfasst auch das Lösen der Bremse."*
"*Bei Anhängern, die eine Einrichtung haben, die es gestattet, die pneumatische Betätigung einer anderen als der Feststellbremsanlage auszuschalten, muss diese Einrichtung so beschatfen sein, dass sie zwangsläufig spätestens dann in normale Betriebsstellung zurückkehrt, wenn der Anhänger erneut mit Druckluft versorgt wird."*

Die beiden zitierten Regelungen stellen Umschreibungen des Erfordernisses eines zwingenden Einsatzes eines Parkventils zur manuellen Betätigung der Feststellbremsanlage einerseits und für ein Löseventil mit automatischer Herbeiführung der Lösestellung bei erneuter Druckluftversorgung des Anhängers andererseits dar. Allerdings kann das zwingende Erfordernis der Herbeiführung der Lösestellung des Löseventils mit Ankuppeln des Anhängers zu einer Beeinträchtigung der Betriebssicherheit führen, wenn der Fahrer vergessen hat, für den Ankuppelvorgang das Parkventil in die Parkstellung zu bringen, da dann mit dem Ankuppeln der Anhänger ungebremst ist und allenfalls über das Zugfahrzeug gehalten wird.

Vor diesem Hintergrund nutzt die Erfindung die Erkenntnis aus, dass das Löseventil gemäß obiger gesetzlicher Regelung lediglich dann zwingend vorgeschrieben ist, wenn die Einrichtung, die es gestattet, die pneumatische Betätigung einer anderen als der Feststellbremsanlage auszuschalten, die Betriebsbremse ist und somit die Notbremsfunktion über die Betriebsbremse realisiert ist. Abweichend hierzu schlägt die Erfindung vor, dass mittels der Ventilbaugruppe die Notbrems- und/oder Abkuppelfunktion bei drucklosem Versorgungsanschluss automatisch eine Entlüftung des Federspeicheranschlusses herbeiführt, so dass die Notbrems- und/oder Abkuppelfunktion durch die Federspeicher-Feststellbremse gewährleistet wird. Erfindungsgemäß erfolgt nicht ein kumulativer Einsatz eines Parkventils und eines Löseventils mit jeweils einem manuellen Betätigungsorgan. Vielmehr verfügt die Ventilbaugruppe über ein einziges manuelles Betätigungsorgan, welches beliebig, beispielsweise als Schalter, Schwenkhebel und insbesondere als Schieber ausgebildet ist. Durch den Einsatz lediglich eines einzigen manuellen Betätigungsorgans kann die Bedienung der Ventilbaugruppe und damit die Betriebssicherheit der Anhängerbremsanlage signifikant erhöht werden, da der Fahrer zur Herbeiführung einer gewünschten Betriebsstellung der Anhängerbremsanlage lediglich ein manuelles Betätigungsorgan betätigen muss. Darüber hinaus besitzt das Betätigungsorgan abweichend zu der Ventilbaugruppe gemäß DE 37 03 536 A1 lediglich zwei Betriebsstellungen, die (unabhängig davon, ob der Versorgungsanschluss belüftet oder entlüftet ist) mit ein-eindeutiger Zuordnung mit einer Belüftung bzw. einer Entlüftung des Federspeicheranschlusses korrelieren, wodurch sich für den Fahrer eine besonders einfache und sichere Betätigungsweise ergibt. Das einzige manuelle Betätigungsorgan ist hierbei im Rahmen der vorliegenden Erfindung sowohl bei druckbeaufschlagtem Versorgungsanschluss, also bei angekuppeltem Zugfahrzeug im Stand, als auch bei drucklosem Versorgungsanschluss, also bei abgekuppeltem Zugfahrzeug oder nach einer Notbremsung infolge eines Abrisses des Kupplungskopfs Vorrat oder der Vorratsleitung, betätigbar, womit je nach Wunsch des Fahrers eine Druckbeaufschlagung oder eine Entlüftung des Federspeicheranschlusses erfolgen kann. Anders gesagt ist damit das einzige manuelle Betätigungsorgan dafür zuständig, wofür bei Einsatz sowohl eines Parkventils als auch eines Löseventils gemäß dem Stand der Technik für die Gewährleistung einer Parkfunktion und einer Lösefunktion zwei manuelle Betätigungsorgane erforderlich waren.

Durchaus möglich ist, dass das manuelle Betätigungsorgan eine einmal von dem Fahrer angewählte Betriebsstellung beibehält oder in besonderen Betriebssituationen wie bspw. mit einem Ankuppeln des Anhängers an das Zugfahrzeug automatisiert wieder verlässt. Für eine besondere Ausgestaltung der Erfindung besitzt das einzige manuelle Betätigungsorgan zumindest für entlüfteten Versorgungsanschluss eine Totmannfunktion. Diese bedeutet, dass eine Betriebsstellung des manuellen Betätigungsorgans lediglich beibehalten wird, wenn der Fahrer Stellkräfte auf das manuelle Betätigungsorgan aufbringt. Entfallen diese Stellkräfte, wird das manuelle Betätigungsorgan (und ein hiermit u. U. gekoppelter Ventilkörper) automatisiert in eine andere Betriebsstellung überführt. Von Vorteil ist dies insbesondere, wenn die Totmannfunktion so ausgebildet ist, dass das manuelle Betätigungsorgan durch die manuell aufgebrachten Stellkräfte in eine Betriebsstellung überführt werden kann, in welcher der Federspeicheranschluss belüftet ist, also die Federspeicher-Feststellbremse gelöst ist. Ist zu diesem Zeitpunkt der Versorgungsanschluss druckbeaufschlagt, kann das manuelle Betätigungsorgan in dieser angewählten Betriebsstellung verbleiben. Ist der Versorgungsanschluss hingegen drucklos, also der Anhänger nicht mit dem Zugfahrzeug gekoppelt, bewirkt die Totmannfunktion, dass das manuelle Betätigungsorgan und damit ein Ventilkörper in die andere Betriebsstellung zurückkehrt, in welcher der Federspeicheranschluss entlüftet ist. Somit gewährleistet die Totmannfunktion, dass für abgekoppelten Anhänger ohne manuelle Betätigung des Betätigungsorgans die Federspeicher-Feststellbremse wirksam ist, also der Anhänger über die Federspeicher-Feststellbremse gebremst ist. Soll hingegen ein Rangieren des Anhängers erfolgen, muss das manuelle Betätigungsorgan durch Aufbringen der Stellkräfte von dem Fahrer gezielt umgeschaltet und in der umgeschalteten Betriebsstellung gehalten werden, wozu sich der Fahrer unter Umständen auch mit dem rangierten Anhänger bewegen muss.

Die erläuterte "Totmann-Funktion" kann insbesondere von Vorteil sein, wenn der Fahrer während der Bedienung des manuellen Betätigungsorgans stolpert oder infolge eines sonstigen Notfalls nicht mehr eine Betätigungskraft auf das Betätigungsorgan aufbringt, womit dann ein definierter Zustand des Anhängers, nämlich eine betätigte Federspeicher-Feststellbremse gewährleistet ist. Eine weitere mögliche Gefahr könnte darin bestehen, dass spielende Kinder die Anhängerbremsanlage betätigen und damit die Federspeicher-Feststellbremse lösen. Erschrecken sich diese bei einem Anrollend des Fahrzeugs, werden die Hände von dem Betätigungsorgan entfernt, womit dann mit der erläuterten "Totmann-Funktion" das Fahrzeug wieder gebremst wird.

Für die konstruktive Ausgestaltung der Ventilbaugruppe gibt es vielfältige Möglichkeiten. Gemäß einem Vorschlag der Erfindung ist ein Ventilkörper vorhanden, der von dem manuellen Betätigungsorgan betätigt wird. Vorzugsweise ist der Ventilkörper starr mit dem manuellen Betätigungsorgan gekoppelt. In einer ersten Ventilstellung des Ventilkörpers verbindet dieser den Federspeicheranschluss mit einem Behälteranschluss, so dass (mit hinreichend befülltem Behälter) in der ersten Ventilstellung die Federspeicher-Feststellbremse gelöst ist, was mit einer Rangierstellung oder fahrbereiten Stellung korreliert. Hingegen verbindet der Ventilkörper in einer zweiten Ventilstellung den Federspeicheranschluss mit einem Entlüftungsanschluss, was einer Notbremsstellung, Abkuppelstellung oder Parkstellung entspricht, für welche die Federspeicher-Feststellbremse entlüftet und damit betätigt ist. Durch manuelle Betätigung des Betätigungsorgans kann somit über den Ventilkörper die Federspeicher-Feststellbremse betätigt und gelöst werden.

Optional kann zusätzlich zu der manuellen Betätigung auf beliebige Weise eine weitere Beeinflussung der Ventilstellung des Ventilkörpers erfolgen, beispielsweise über eine Aufbringung magnetischer Stellkräfte und/oder pneumatische oder elektropneumatisch vorgesteuerte Stellkräfte. In weiterer Ausgestaltung der Erfindung ist ein Schaltventilkörper vorhanden. In einer ersten Schaltventilstellung übt dieser Schaltventilkörper keine Stellkraft auf den Ventilkörper aus, während der Schaltventilkörper in einer zweiten Schaltventilstellung den Ventilkörper in Richtung der zweiten Ventilstellung beaufschlagt oder in dieser sichert. Korreliert die zweite Schaltventilstellung mit drucklosem Versorgungsanschluss, hat das Abkuppeln oder eine Notbremssituation eine Umschaltung des Schaltventilkörpers von der ersten Schaltventilstellung zu der zweiten Schaltventilstellung zur Folge, womit der Ventilkörper die zweite Ventilstellung einnimmt und den Federspeicheranschluss mit einem Entlüftungsanschluss verbindet, womit automatisiert die Federspeicher-Feststellbremse für eine Notbremsfunktion oder für das Abkuppeln des Anhängers betätigt wird.

In weiterer Ausgestaltung der Erfindung ist in der ersten Schaltventilstellung des Schaltventilkörpers sowohl die erste Ventilstellung als auch die zweite Ventilstellung stabil. Ist somit der Versorgungsanschluss druckbeaufschlagt, kann der Fahrer willkürlich wählen, ob die Federspeicher-Feststellbremse betätigt oder gelöst ist, wobei eine angewählte Ventilstellung dann erhalten bleibt. Eine Sicherheitsfunktion wird für diese Ausgestaltung der Erfindung nur in der zweiten Schaltventilstellung derart wirksam, dass die zweite Ventilstellung stabil ist, also die Ventilstellung mit betätigter Federspeicher-Feststellbremse stabil ist, während die erste Ventilstellung mit gelöster Federspeicher-Feststellbremse lediglich eingenommen wird, wenn und solange manuelle Betätigungskräfte auf das manuelle Betätigungsorgan ausgeübt werden.

Für die Beeinflussung der Schaltventilstellungen des Schaltventilkörpers gibt es vielfältige Möglichkeiten. Gemäß einem Vorschlag der Erfindung ist der Schaltventilkörper mit einem integralen oder an diesem abgestützten oder gehaltenen Notbremskolben gebildet. Der Notbremskolben besitzt eine Kolbenfläche, die entgegen der Wirkung einer Feder mit dem Druck an dem Versorgungsanschluss beaufschlagt ist. Somit ist die Betriebsstellung des Schaltventilkörpers oder sind die Stellkräfte, die auf den Schaltventilkörper wirken, abhängig davon, ob der Versorgungsanschluss druckbeaufschlagt oder drucklos ist.

Entsprechend einem weiteren Vorschlag der Erfindung ist der Federspeicheranschluss in der ersten Ventilstellung des Ventilkörpers über einen in Richtung des Federspeicheranschlusses öffnenden Rückschlagventil mit einem Behälteranschluss verbunden. Dieses Rückschlagventil kann einen Lösedruck in einer Federspeicher-Bremskammer sichern gegenüber einem unter Umständen kurzfristigen Einbruch des Drucks an dem Behälteranschluss und damit in dem Behälter, wie dies beispielsweise der Fall sein kann bei einer fortgesetzten, stark modulierten oder wiederholten ABS-Betriebsbremsung. Trotz der Sicherungswirkung des Rückschlagventils kann der Lösedruck in der Federspeicher-Bremskammer automatisch in einer Notbremssituation oder Abkuppelsituation und/oder manuell durch Betätigung des Betätigungsorgans entlüftet werden durch Umschalten des Ventilkörpers in die zweite Ventilstellung.

Wie bereits zuvor erwähnt, kann die Ventilbaugruppe als eine Ventileinheit ausgebildet sein. In weiterer Ausgestaltung ist diese Ventileinheit modular ausgebildet. Um lediglich ein Beispiel für eine derartige Ausgestaltung zu nennen, kann die Ventileinheit über ein Drucksicherungsmodul verfügen, in welchem beispielsweise das in Richtung des Federspeicheranschlusses öffnende Rückschlagventil und/oder ein Rückschlagventil, über welches der Behälter vom Versorgungsanschluss gespeist ist, angeordnet sein. Des Weiteren kann ein Betätigungsmodul in der Ventileinheit eingesetzt sein, welches über ein manuelles Betätigungsorgan eine manuelle Betätigung durch den Fahrer ermöglicht. Beispielsweise kann das Betätigungsmodul den Ventilkörper und/oder den Schaltventilkörper aufweisen. In das Betätigungsmodul ist vorzugsweise dann die Notbremsfunktion und/oder Abkuppelfunktion integriert. Hierbei können das Drucksicherungsmodul und das Betätigungsmodul aneinander angeflanscht sein, wobei mit dem Anflanschen auch pneumatische Leitungsverbindungen zwischen diesen Modulen geschaffen und abgedichtet werden können.

In weiterer Ausgestaltung der Erfindung ist das manuelle Betätigungsorgan oder ein von diesem betätigter Ventilkörper über ein elektrisches Betätigungssignal von der oder einer zweiten Ventilstellung, in welcher der Federspeicheranschluss entlüftet ist, in eine oder die erste Ventilstellung, in welcher der Federspeicheranschluss belüftet ist, umschaltbar. Mittels dieses elektrischen Betätigungssignals kann insbesondere für angekuppelten Anhänger über eine geeignete Steuereinheit oder einen Schalter, eine Funkfernbedienung u. ä. die Umschaltung bewirkt werden, mit welcher die Federspeicher-Feststellbremse gelöst wird, also eine Fahrbereitschaft herbeigeführt wird. Für andere Ventilbaugruppen, insbesondere Hebe-Senk-Ventilbaugruppen, wird eine mögliche derartige Funktion auch als "Reset-to-Ride"-Funktion bezeichnet, welche erfindungsgemäß auch in die hier vorliegende Ventilbaugruppe integriert wird. Um lediglich einige Beispiele zu nennen, kann der Fahrer über ein Bedienelement im Fahrerhaus oder an anderer Stelle an dem Zugfahrzeug oder dem Anhänger die Fahrbetriebsbereitschaft herbeiführen, wenn dieser losfahren möchte. Ebenfalls möglich ist, dass der bevorstehende Fahrantritt automatisiert erkannt wird, insbesondere durch Erkennen des Öffnens der Fahrertür, Erkennen der Belegung des Fahrersitzes, Betätigung der Zündung, erstmalige Betätigung eines Bremspedals oder eines Gaspedals, Vorliegen eines Bremslichtsignals u. ä.

Möglich ist auch, dass für den Einsatz eines automatischen Kupplungssystems, für welches der Anhänger mit der Annäherung des Zugfahrzeugs mit Rückwärtsfahrt automatisch mit dem Zugfahrzeug gekoppelt wird, mit automatisierter Erkennung der Ankupplung des Zugfahrzeugs das Überführen des Ventilkörpers in die erste Ventilstellung herbeigeführt wird. Dies kann bedeuten, dass der Fahrer automatisch das Zugfahrzeug an den Anhänger ankuppelt und dann automatisch die Federspeicher-Feststellbremse des Anhängers gelöst wird, so dass der Fahrer den Kuppelvorgang durch die Rückwärtsfahrt steuert und anschließend losfahren kann, ohne dass der Fahrer das Fahrerhaus verlassen muss oder weitere Bedienpersonen erforderlich sind, um die Federspeicherfeststellbremse zu lösen. Hinsichtlich weiterer möglicher Details für eine Betätigung und Durchführung dieser "Reset-to-Ride"-Funktion wird auf die Ausgestaltungen gemäß der Patentanmeldung DE 10 2008 060 912 A1 der Anmelderin verwiesen.

Die Erzeugung des elektrischen Betätigungssignals sowie die Beeinflussung der Ventilstellung durch das elektrische Betätigungssignal kann beliebig sein. Für einen besonderen Vorschlag der Erfindung wird das manuelle Betätigungsorgan oder der Ventilkörper über einen pneumatischen Steuerdruck von der zweiten Ventilstellung in die erste Ventilstellung umgeschaltet entsprechend dem elektrischen Betätigungssignal. Der pneumatische Steuerdruck ist hierbei über ein Magnetventil gesteuert, welches von dem elektrischen Betätigungssignal beaufschlagt ist. Hierbei kann das Magnetventil den pneumatischen Steuerdruck unmittelbar erzeugen oder zur Vorsteuerung eines anderen Ventils eingesetzt sein, welches dann den pneumatischen Steuerdruck erzeugt.

Die erfindungsgemäße Ventilbaugruppe kann eingesetzt werden in einer pneumatischen Anhängerbremsanlage. Hierbei ist möglich, dass in einer Notbremssituation oder Abkuppelsituation die volle Bremskraft über die Federspeicher-Feststellbremse erzeugt wird. Durch weitere, hier nicht näher beschriebene und dargestellte Maßnahmen kann auch für einen ausreichenden Druck in einem Behälter in einer Notbrems- oder Abkuppelsituation vorrangig eine Betätigung der Betriebsbremse erfolgen, womit eine abgestufte und auch modulierte Bremsung gewährleistet werden kann.

In bevorzugter Ausgestaltung ist in der pneumatischen Anhängerbremsanlage ein Wechselventil eingesetzt. Ein erster Eingang des Wechselventils ist mit dem Federspeicheranschluss der Ventilbaugruppe verbunden. Ein zweiter Eingang ist mit einer zu Betriebsbremskammern führenden Betriebsbremsleitung verbunden. Ein Ausgang des Wechselventils beaufschlagt die Federspeicher-Bremskammer. Auf diese Weise kann eine Überlastung eines Kombi-Bremszylinders verhindert werden, was auch als "Anti-Compound"-Funktion bezeichnet wird.

Die vorliegende Erfindung schlägt für eine bevorzugte Ausführungsform der Anhängerbremsanlage vor, dass der Ausgang des Wechselventils über ein Schnellentlüftungsventil mit der Federspeicher-Bremskammer verbunden ist. Hierdurch kann trotz unter Umständen kleinen Ventilquerschnitten anderer pneumatischer Bauelemente der Anhängerbremsanlage, insbesondere der Ventilbaugruppe, eine Bereitstellung eines großen Entlüftungsquerschnitts gewährleistet werden, womit eine schnelle Entlüftung der Federspeicher-Feststellbremsen und damit eine schnelle Aktivierung der Federspeicher-Feststellbremse möglich ist.

In weiterer Ausgestaltung der Erfindung ist eine Ventileinheit gebildet mit einem Bremssteuergerät, insbesondere einer EBS-Steuereinheit, einem Wechselventil und/oder dem Schnellentlüftungsventil. Beispielsweise kann eine derartige Ventileinheit einen Steueranschluss für eine Bremssteuerleitung, die mit dem Kupplungskopf Bremse verbunden ist, einen Betriebsbremsanschluss, welcher mit einer Betriebsbremskammer verbunden ist, einen Federspeicher-Bremsanschluss, welcher mit der Federspeicher-Bremskammer verbunden ist, einen Federspeicheranschluss, welcher mit dem Federspeicheranschluss der Ventilbaugruppe verbunden ist und einen Versorgungsanschluss, welcher mit einem Behälter der Anhängerbremsanlage verbunden ist, aufweisen. Bspw. ist die eingangs erläuterte, das Betätigungsorgan aufweisende Ventilbaugruppe als eine Ventileinheit ausgebildet, während das Bremssteuergerät, das Wechselventil und/oder das schnelle Entlüftungsventil eine weitere Ventileinheit bilden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Anhängerbremsanlage mit einer Ventilbaugruppe für von dem Zugfahrzeug abgekuppelten Anhänger und betätigte Federspeicher-Feststellbremse.
- **Fig. 2**: zeigt die Anhängerbremsanlage gemäß Fig. 1 für an das Zugfahrzeug angekuppelten Anhänger und betätigte Federspeicher-Feststellbremse.
- **Fig. 3**: zeigt die Anhängerbremsanlage gemäß Fig. 1 und 2 für an das Zugfahrzeug abgekuppelten Anhänger für gelöste Federspeicher-Feststellbremse infolge und während einer manuellen Betätigung eines Betätigungsorgans der Ventilbaugruppe.
- **Fig. 4**: zeigt eine weitere erfindungsgemäße Anhängerbremsanlage mit Ventilbaugruppe, bei welcher eine Reset-to-Ride-Funktion über ein nach Maßgabe eines elektrischen Betätigungssignals betätigtes Magnetventil gewährleistet wird.

### FIGURENBESCHREIBUNG

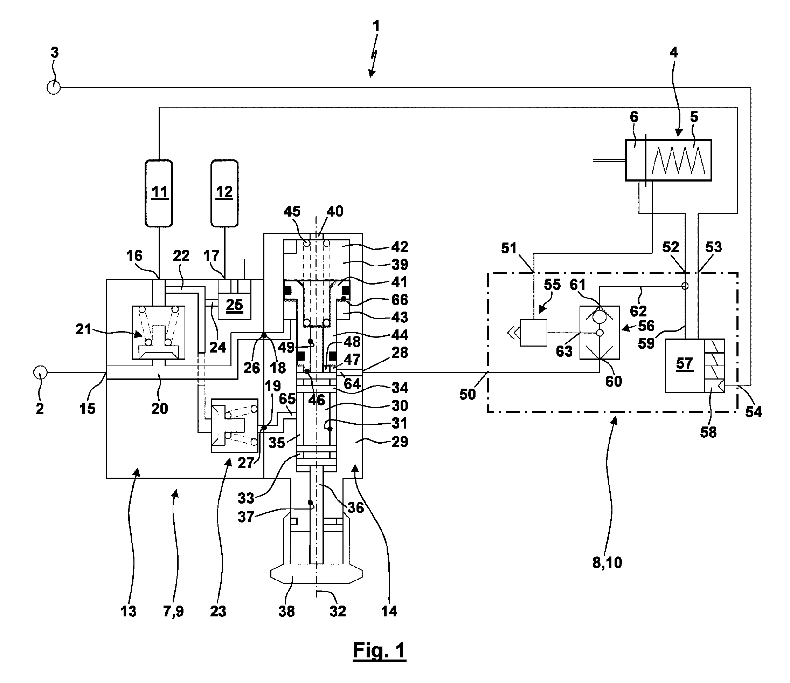

**Fig. 1** zeigt schematisiert eine Anhängerbremsanlage 1 eines Nutzfahrzeugs. Der mit der Anhängerbremsanlage 1 ausgestattete Anhänger bildet zusammen mit einem Zugfahrzeug einen Fahrzeugzug. Eine pneumatische Kopplung zwischen Anhänger und Zugfahrzeug erfolgt über einen Kupplungskopf Vorrat 2, über welchen die Anhängerbremsanlage 1 von dem Zugfahrzeug mit einem Versorgungsdruck gespeist wird, sowie einen Kupplungskopf Bremse 3, über welchen der Anhängerbremsanlage 1 ein Bremssteuerdruck zugeführt wird, welcher mit der Betätigung eines Bremspedals des Zugfahrzeugs durch den Fahrer korreliert. Die Anhängerbremsanlage 1 ist zumindest an einigen Achsen mit einem Kombi-Bremszylinder 4 ausgestattet mit einer Federspeicher-Feststellbremse 5 und einer Betriebsbremse 6. Es versteht sich, dass die Anhängerbremsanlage 1 üblicherweise über mehr als den einen dargestellten Kombi-Bremszylinder 4 verfügt, wobei auch Achsen ausschließlich mit Betriebsbremsen 6 und/oder Federspeicher-Feststellbremsen 5 ausgestattet sein können. Die dargestellten pneumatischen Leitungen zur Be- und Entlüftung der Federspeicher-Feststellbremsen 5 und Betriebsbremsen 6 können entsprechend verzweigt ausgebildet sein.

Die Anhängerbremsanlage 1 verfügt über eine erste Ventilbaugruppe 7 sowie über eine zweite Ventilbaugruppe 8, welche hier als Ventileinheiten 9, 10 ausgebildet sind. Durchaus möglich ist aber auch, dass einzelne pneumatische Elemente der Ventilbaugruppen 7, 8 als singuläre Bauelemente ausgebildet sind, die dann über Verbindungsleitungen miteinander gekoppelt sind. Die Anhängerbremsanlage 1 verfügt weiterhin über einen Behälter 11, über welchen unmittelbar oder mittelbar die Federspeicher-Feststellbremse 5 und/oder die Betriebsbremse 6 mit Druckluft versorgt werden kann. Ein weiterer Behälter 12 wird ebenfalls über die Ventileinheit 9 mit Druckluft versorgt. Der Behälter 12 ist einem Nebenverbraucherkreis zugeordnet.

Gemäß Fig. 1 ist die Ventileinheit 9 modular ausgebildet mit einem Drucksicherungsmodul 13 und einem Betätigungsmodul 14. Das Drucksicherungsmodul 13 und das Betätigungsmodul 14 sind aneinander angeflanscht zur Bildung der Ventileinheit 9. Das Drucksicherungsmodul 13 besitzt einen Versorgungsanschluss 15, welcher mit dem Kupplungskopf Vorrat 2 direkt verbunden ist. Weiterhin verfügt das Drucksicherungsmodul 13 über einen Behälteranschluss 16, der unmittelbar mit dem Behälter 11 pneumatisch verbunden ist, sowie einen Behälteranschluss 17, der unmittelbar mit dem Behälter 12 pneumatisch verbunden ist. Das Drucksicherungsmodul 13 besitzt auch zwei Anschlüsse 18, 19, über welche das Drucksicherungsmodul 13 mit dem Betätigungsmodul 14 pneumatisch kommuniziert.

Der Versorgungsanschluss 15 ist unmittelbar mit dem Anschluss18 verbunden. Des Weiteren ist der Versorgungsanschluss 15 über eine Verzweigung 20 und ein Rückschlagventil 21 mit dem Behälteranschluss 16 und über diesen mit dem Behälter 11 verbunden. Das Rückschlagventil 21 öffnet bei einem Druckgefälle zwischen dem Versorgungsanschluss 15 in Richtung des Behälteranschlusses 16, während das Rückschlagventil 21 bei abgekuppeltem Kupplungskopf Vorrat 2 vermeidet, dass der Behälter 11 über den Behälteranschluss 16, das Rückschlagventil 21, die Verzweigung 20 und den Versorgungsanschluss 15 entlüftet wird. Zwischen dem Rückschlagventil 21 und dem Behälteranschluss 16 zweigt eine Zweigleitung 22 ab, die somit von dem Behälter 11 mit Druckluft versorgt wird. Die Zweigleitung 22 ist über ein in Richtung des Anschlusses 19 öffnendes Rückschlagventil 23 mit dem Anschluss 19 verbunden. Von der Zweigleitung 22 zweigt wiederum eine Zweigleitung 24 ab, die über ein Überströmventil oder Drucksicherungsventil 25 mit dem Behälteranschluss 17 und über diesen mit dem Behälter 12 für den Nebenverbraucherkreis verbunden ist.

Durch das Anflanschen des Betätigungsmoduls 14 an das Drucksicherungsmodul 13 werden die Anschlüsse 18, 19 des Drucksicherungsmoduls 13 mit entsprechenden Anschlüssen 26, 27 des Betätigungsmoduls 14 pneumatisch verbunden. Das Betätigungsmodul 14 verfügt über einen Federspeicheranschluss 28. In einem Gehäuse 29 des Betätigungsmoduls 14 ist ein Ventilkörper 30 in einer Bohrung 31 verschieblich in Richtung einer Längs- und Betätigungsachse 32 geführt. Der Ventilkörper 30 bildet eine Dichtkante 33 und eine Steuerkante 34 aus, welche in axialer Richtung in an sich bekannter Weise eine Steuerkammer 35 begrenzen. Die Steuerkammer 35 ist radial innenliegend begrenzt durch den Ventilkörper 30 sowie radial außenliegend durch die Bohrung 31 des Gehäuses 29. Der Ventilkörper 30 bildet einen Betätigungsstößel 36 aus. Der Betätigungsstößel 36 tritt durch eine Durchgangsbohrung 37 des Gehäuses 29 hindurch und trägt in dem außenliegenden Endbereich ein Betätigungsorgan 38, hier einen Betätigungsknopf. Auf der dem Betätigungsknopf 38 abgewandten Seite mündet die Bohrung 31 in eine Schaltventilkammer 39, welche mit einem Entlüftungsanschluss 40 verbunden ist. Die Schaltventilkammer 39 ist durch einen Schaltventilkolben 41 unterteilt in eine mit dem Entlüftungsanschluss 40 verbundene Federkammer 42 und eine Schaltventil-Steuerkammer 43. Die Schaltventil-Steuerkammer 43 ist pneumatisch verbunden mit dem Anschluss 26, so dass letztendlich in der Schaltventil-Steuerkammer 43 der Druck an dem Versorgungsanschluss 15 bzw. dem Kupplungskopf Vorrat 2 herrscht. Der Schaltventilkolben 41 ist Bestandteil eines Schaltventilkörpers 44, welcher sich unter radialer Abdichtung teilweise in die Bohrung 31 erstreckt. Der Schaltventilkörper 44 ist über eine Feder 45 an einem Boden der Federkammer 42 abgestützt, welche den Schaltventilkörper 44 in Richtung des Betätigungsorgans 38 beaufschlagt. In der in Fig. 1 wirksamen Schaltventilstellung des Schaltventilkörpers 44 liegt eine Stirnseite 46 des Schaltventilkörpers 44 an einer Stirnseite des Ventilkörpers 30, hier benachbart der Steuerkante 34, an. Im Bereich der Stirnseite 46 bildet der Schaltventilkörper 44 eine Steuerkammer 47 aus, welche in axialer Richtung begrenzt ist durch die Steuerkante 34 und über eine radiale Ausnehmung 48 und eine in Richtung der Längsachse orientierte Durchgangbohrung 49 pneumatisch verbunden ist mit der Federkammer 42 und damit dem Entlüftungsanschluss 40.

Die Ventileinheit 10 verfügt über einen Federspeicheranschluss 50, der unmittelbar mit dem Federspeicheranschluss 28 der Ventileinheit 9 verbunden ist. Weiterhin ist ein Federspeicher-Bremsanschluss 51 der Ventileinheit 10 unmittelbar mit einer Federspeicher-Bremskammer der Federspeicher-Feststellbremse 5 verbunden, während ein Betriebsbremsanschluss 52 der Ventileinheit 10 unmittelbar mit einer Betriebsbremskammer der Betriebsbremse 6 verbunden ist. Ein Versorgungsanschluss 53 der Ventileinheit 10 wird unmittelbar aus dem Behälter 11 mit Druckluft versorgt. Schließlich ist ein Bremssteueranschluss 54 unmittelbar mit dem Kupplungskopf Bremse 3 pneumatisch verbunden. In der Steuereinheit 10 sind ein Schnellentlüftungsventil 55, ein Wechselventil 56 und eine EBS-Steuereinheit 57 angeordnet. Die EBS-Steuereinheit 57 wird über den Versorgungsanschluss 53 mit Druckluft versorgt. Ein pneumatischer Steueranschluss 58 der EBS-steuereinheit 57 ist über den Bremssteueranschluss 54 mit dem Bremssteuerdruck des Kupplungskopfes Vorrat 3 beaufschlagt. Weitere vorzugsweise elektrische Steueranschlüsse sind ebenfalls an der EBS-Steuereinheit 57 vorgesehen. Die EBS-Steuereinheit 57 steuert entsprechend dem Bremssteuerdruck an dem Steueranschluss 58 einen abgestuften und modulierten Betriebsbremsdruck aus, welcher über eine Betriebsbremsleitung 59 zu dem Betriebsbremsanschluss 52 und damit der Betriebsbremse 6 gelangt.

Das Wechselventil 56 besitzt einen ersten Eingang 60, der mit dem Federspeicheranschluss 50 verbunden ist, einen zweiten Eingang 61, der über eine Zweigleitung 62 mit der Betriebsbremsleitung 59 verbunden ist sowie einen Ausgang 63, der zur Steuerung der Funktion des Schnellentlüftungsventils 55 mit dem Schnellentlüftungsventil 55 verbunden ist. Je nach dem Druck an dem Ausgang 63 erfolgt über das Schnellentlüftungsventil 55 die Entlüftung des Federspeicher-Bremsanschlusses 51 und damit der Federspeicher-Bremskammer der Federspeicher-Feststellbremse 5.

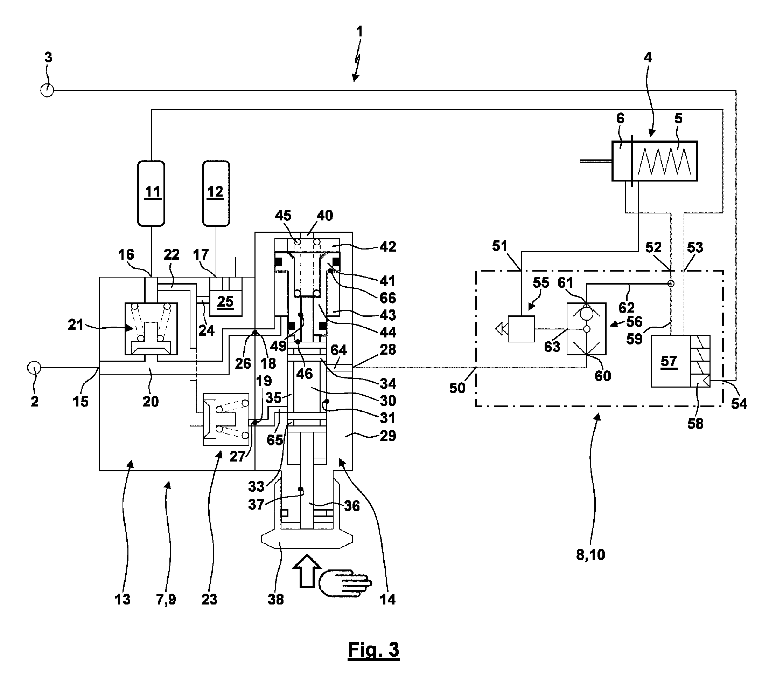

Die Fig. 1 und 3 zeigen unterschiedliche Betriebsstellungen der Anhängerbremsanlage 1, wie diese zuvor beschrieben worden ist. Die Funktion der Anhängerbremsanlage 1 ist wie folgt:
a) Fig. 1 zeigt die Anhängerbremsanlage 1 in einer Betriebsstellung, in welcher der Anhänger von dem Zugfahrzeug abgekuppelt ist, so dass die Kupplungsköpfe 2, 3 drucklos sind. Eine Drucksicherung in dem Behälter 11 gegenüber einer Entlüftung über den Kupplungskopf Vorrat 2 erfolgt mittels des Rückschlagventils 21. Die Schaltventil-Steuerkammer 43 ist über die Anschlüsse 18, 26 und den Versorgungsanschluss 15 infolge des drucklosen Kupplungskopfs Vorrat 2 entlüftet, was zur Folge hat, dass eine Kolbenfläche 66 des Schaltventilkolbens 41, mittels welcher die Schaltventil-Steuerkammer 43 begrenzt ist, ebenfalls entlüftet ist. Damit wirkt auf den Schaltventilkolben 41 als Stellkraft ausschließlich die Kraft der Feder 45. Die Kraft der Feder 45 schiebt den Schaltventilkolben 41 nach unten, wobei durch die Anlage der Stirnseite 46 des Schaltventilkörpers 44 auch der Ventilkörper 30 nach unten mitgenommen wird. Infolge der Feder 45 stellt sich somit eine zweite Schaltventilstellung des Schaltventilkörpers 44 und eine zweite Ventilstellung des Ventilkörpers 30 ein, wie diese in Fig. 1 dargestellt sind. In dieser zweiten Ventilstellung des Ventilkörpers 30 hat die Steuerkante 34 des Ventilkörpers 30 einen mit dem Federspeicheranschluss 28 verbundenen Steueranschluss 64 nach unten überfahren. In der zweiten Ventilstellung trennt die Steuerkante 34 somit den Steueranschluss 64 von der Steuerkammer 35, in welche ein Steueranschluss 65 einmündet, der mit den Anschlüssen 19, 27 pneumatisch verbunden ist. Dies hat zur Folge, dass der Federspeicheranschluss 28 gegenüber dem Behälter 11 abgesperrt ist. Vielmehr wird in der zweiten Ventilstellung der Federspeicheranschluss 28 über den Steueranschluss 64, die Steuerkammer 47, die Ausnehmung 48 und die Durchgangsbohrung 49 mit der Federkammer 42 verbunden und über den Entlüftungsanschluss 40 entlüftet. Dies hat zur Folge, dass über den Federspeicheranschluss 50 und den ersten Eingang 60 des Wechselventils 56 (bei druckloser Betriebsbremsleitung 59) auch der Steueranschluss des Schnellentlüftungsventils 55 entlüftet wird. Dies hat letztendlich die Entlüftung der Federspeicher-Bremskammer der Federspeicher-Feststellbremse 5 zur Folge, so dass die Federspeicher-Feststellbremse 5 betätigt ist. Letztendlich hat die erfindungsgemäße Anhängerbremsanlage 1 zur Folge, dass bei abgekuppeltem Anhänger die Federspeicher-Feststellbremse 5 betätigt ist. Letztendlich hat die erfindungsgemäße Anhängerbremsanlage 1 zur Folge, dass bei abgekuppeltem Anhänger die Federspeicher-Feststellbremse 5 betätigt ist.
b) Soll für abgekuppelten Anhänger die Federspeicher-Feststellbremse 5 für ein Rangieren gelöst werden, muss der Fahrer Stellkräfte auf das Betätigungsorgan 38 aufbringen, welche groß genug sind, um den Ventilkörper 30 und den mit seiner Stirnseite 46 hieran anliegenden Schaltventilkörper 44 entgegen der Beaufschlagung durch die Feder 45 in Fig. 1 nach oben zu bewegen, s. Fig. 3. Diese Bewegung hat zur Folge, dass die Steuerkante 34 den Steueranschluss 64 überfährt. Nach diesem Überfahren münden in der dann vorliegenden ersten Ventilstellung beide Steueranschlüsse 64, 65 in die Steuerkammer 35 ein, wodurch die Steueranschlüsse 64, 65 miteinander verbunden sind. Diese Verbindung hat zur Folge, dass der Federspeicheranschluss 28 aus dem Behälter 11 über den Behälteranschluss 16, die Zweigleitung 22, das Rückschlagventil 23, die Anschlüsse 19, 27, den Steueranschluss 65, die Steuerkammer 35 und den Steueranschluss 64 mit Druckluft versorgt wird. Über den Federspeicheranschluss 50 steht damit auch Druckluft an dem ersten Eingang 60 an, welcher (bei druckloser Betriebsbremsleitung 59) über den Ausgang 63 auch auf den Steueranschluss des Schnelllöseventils 55 einwirkt. Dies hat letztendlich die Belüftung der Federspeicher-Bremskammer der Federspeicher-Feststellbremse 5 zur Folge, so dass die Federspeicher-Feststellbremse 5 gelöst wird. Dies Lösen der Federspeicher-Feststellbremse 5 erfolgt allerdings nur so lange, wie der Benutzer hinreichende Stellkräfte auf das Betätigungsorgan 38 aufbringt, um den Ventilkörper 30 entgegen der Beaufschlagung durch die Feder 45 in der ersten Ventilstellung zu halten, in welcher die Steuerkante 34 den Steueranschluss 64 überfahren hat, so dass beide Steueranschlüsse 64, 65 in die Steuerkammer 35 einmünden.

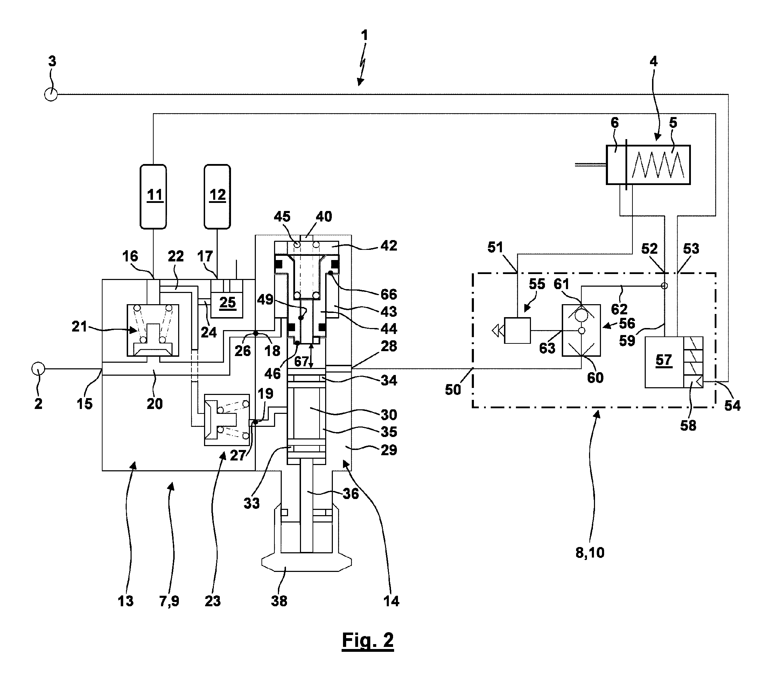

c) **Fig. 2** zeigt eine Betriebsstellung der Anhängerbremsanlage 1, für welche der Anhänger an das Zugfahrzeug angekuppelt ist. Hierbei ist der Kupplungskopf Vorrat 2 mit Druckluft versorgt. Über den Versorgungsanschluss 15, das Rückschlagventil 21 und den Behälteranschluss 16 kann der Behälter 11 mit dem Zugfahrzeug entstammender Druckluft versorgt werden. Des Weiteren gelangt die Druckluft von dem Kupplungskopf Vorrat 2 über den Versorgungsanschluss 15 und die Verzweigung 20 sowie die Anschlüsse 18, 26 zu der Schaltventil-Steuerkammer 34. Die Steifigkeit der Feder 45 und die Größe der Kolbenfläche 66 sind hierbei derart dimensioniert, dass die an der Kolbenfläche 66 wirkende Stellkraft entgegen der Beaufschlagung durch die Feder 45 den Schaltventilkörper 44 nach oben bewegt. Somit löst sich die Stirnseite 46 des Schaltventilkörpers 44 von dem Ventilkörper 30 ab. Gemäß Fig. 2 befindet sich somit der Ventilkörper 30 noch in der zweiten Ventilstellung, in welcher die Steuerkante 34 die Steueranschlüsse 64, 65 trennt, so dass der Federspeicheranschluss 28 weiterhin entlüftet ist. Hingegen ist der Schaltventilkörper 44 von der zweiten Schaltventilstellung gemäß Fig. 1 bewegt in die erste Schaltventilstellung gemäß Fig. 2. In der Betriebsstellung gemäß Fig. 2 mit angekuppeltem Anhänger ist die Federspeicher-Feststellbremse 5 entlüftet und damit betätigt.
d) Wie in Fig. 2 zu erkennen ist, ergibt sich bei angekuppeltem Zustand und Ventilkörper 30 in der zweiten Ventilstellung sowie Schaltventilkörper 44 in der ersten Schaltventilstellung ein Abstand 67 der Stirnseite 46 des Schaltventilkörpers 44 von dem Ventilkörper 30. Der Abstand 67 ist so groß, dass der Ventilkörper 30 von der in Fig. 2 wirksamen zweiten Ventilstellung überführt werden kann in die erste Ventilstellung, wie dies in **Fig. 3** dargestellt ist, durch Ausübung einer manuellen Stellkraft auf das Betätigungsorgan 38. Infolge des Abstands 67 übt der Schaltventilkörper 44 während der Überführung von der zweiten Ventilstellung in die erste Ventilstellung keine Stellkraft auf den Ventilkörper 30 aus. Ist durch manuelle Betätigung des Betätigungsorgans 38 der Ventilkörper 30 von der zweiten Ventilstellung gemäß Fig. 2 überführt in die erste Ventilstellung gemäß Fig. 3, verbleibt der Ventilkörper 30 in der ersten Ventilstellung, auch wenn die Betätigungskräfte nicht weiter auf das Betätigungsorgan 38 einwirken. In der ersten Ventilstellung ist über die Steuerkammer 35 eine Verbindung zwischen den Steueranschlüssen 64, 65 geschaffen, wodurch letztendlich die Federspeicher-Feststellbremse 5 gelöst ist durch Druckbeaufschlagung aus dem Behälter 11.
e) Umgekehrt ist es möglich, dass für angekuppelten Anhänger durch Ziehen an dem Betätigungsorgan 38 die erste Ventilstellung gemäß Fig. 3 verändert wird in die zweite Ventilstellung gemäß Fig. 2, wobei der Schaltventilkörper 44 unverändert in der ersten Schaltventilstellung bleibt. Somit kann für angekuppelten Anhänger wahlweise die Federspeicher-Feststellbremse 5 betätigt und gelöst werden.
f) Wird ausgehend von einer Betriebsstellung gemäß Fig. 2 oder Fig. 3 der Anhänger abgekuppelt oder ergibt sich eine Notbremssituation infolge eines Abrisses des Kupplungskopfes Vorrat 2, so erfolgt eine Entlüftung der Schaltventil-Steuerkammer 43. Dies hat zur Folge, dass der Schaltventilkörper 44 seine erste Schaltventilstellung gemäß Fig. 2 und 3 verlässt infolge der Beaufschlagung durch die Feder 45 und in die zweite Schaltventilstellung gemäß Fig. 1 überführt wird. Erfolgt dies ausgehend von der Betriebsstellung gemäß Fig. 2, überwindet der Schaltventilkörper 44 lediglich den Abstand 67, ohne dass hierdurch eine Bewegung des Ventilkörpers 30, welcher sich in der zweiten Ventilstellung befindet, erfolgt. Erfolgt das Ankuppeln hingegen ausgehend von der Betriebsstellung gemäß Fig. 3, wird mit der Bewegung des Schaltventilkörpers 44 auch der Ventilkörper 30 von der ersten Ventilstellung in die zweite Ventilstellung gemäß Fig. 1 überführt. Es ergibt sich somit ohne Aufbringung von Betätigungskräften auf das Betätigungsorgan 38 bei abgekuppeltem Anhänger oder in der Notbremssituation die Betriebsstellung gemäß Fig. 1.

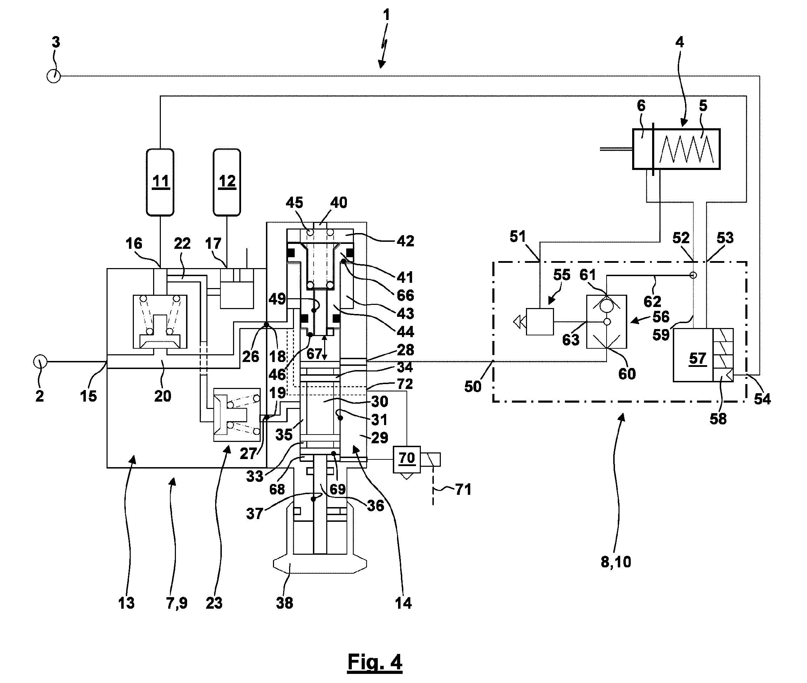

Soll ausgehend von der Betriebsstellung gemäß Fig. 2 ein Fahrantritt erfolgen, muss zunächst die Federspeicher-Feststellbremse 5 vom Fahrer manuell gelöst werden, in dem über die Betätigung des Betätigungsorgans 38 der Ventilkörper 30 von der zweiten Ventilstellung gemäß Fig. 2 überführt wird in die erste Ventilstellung gemäß Fig. 3, wozu der Fahrer das Fahrerhaus verlassen muss. In **Fig. 4** ist eine abgewandelte Ausführungsform für die Ventileinheit 9 dargestellt: Hier wirkt auf den Ventilkörper 30 zusätzlich der Druck in einer Steuerkammer 68 ein. Die Steuerkammer 68 ist begrenzt durch die Bohrung 31, das Gehäuse 29 und eine Kolbenfläche 69 des Ventilkörpers 30, welche hier von einer der Steuerkammer 68 zugewandten Ringfläche der Dichtkante 33 ausgebildet ist. Die Steuerkammer 68 kann über ein Magnetventil 70 be- und entlüftet werden. Für das dargestellte Ausführungsbeispiel ist das Magnetventil 70 außerhalb der Ventileinheit 9 angeordnet. Das Magnetventil 70 wird von der Ventileinheit 9 über einen Anschluss 72 mit Druckluft versorgt, welche hier der Steuerkammer 43 oder der pneumatischen Verbindungsleitung der Steuerkammer 43 mit dem Versorgungsanschluss 15 entnommen ist. Das Magnetventil 70 wird durch ein elektrisches Betätigungssignal 71 gesteuert. Das elektrische Betätigungssignal 71 wird durch eine hier nicht dargestellte Steuereinheit oder die EBS-Steuereinheit 57 erzeugt. Erfolgt über das elektrische Betätigungssignal 71 eine Belüftung der Steuerkammer 68, wird an der Kolbenfläche 69 des Ventilkörpers 30 eine Stellkraft erzeugt, welche ausgehend von der in Fig. 4 dargestellten Betriebsstellung, in der der Ventilkörper 30 in der ersten Ventilstellung ist, also die Federspeicher-Feststellbremse 5 entlüftet und damit betätigt ist, und der Schaltventilkörper 44 in der zweiten Schaltventilstellung ist, zur Folge hat, dass der Ventilkörper 30 nach oben bewegt wird, so dass der Abstand 67 überwunden wird und bei unveränderter Schaltventilstellung des Schaltventilkörpers 44 der Ventilkörper 30 in die zweite Ventilstellung überführt wird, in welcher die Federspeicher-Feststellbremse 5 gelöst ist. Somit kann über ein elektrisches Betätigungssignal 71 der fahrbereite Zustand herbeigeführt werden. Das elektrische Betätigungssignal 71 kann durch eine beliebige Steuereinheit automatisiert herbeigeführt werden, beispielsweise wenn die Beaufschlagung des Antriebsstrangs des Zugfahrzeugs mit einem Antriebsmoment, eine einsetzende Bewegung, die Betätigung der Zündung, eine Fahrersitzbelegung u. ä. erkannt wird. Ebenfalls möglich ist, dass der Fahrer über eine Funkfernbedienung, einen Schalter im Fahrerhaus u. ä. das elektrische Betätigungssignal 71 auslöst. Es versteht sich darüber hinaus, dass es durchaus möglich ist, dass das Magnetventil 70 in die Ventileinheit 9, hier vorzugsweise in das Betätigungsmodul 14, integriert ist.

### BEZUGSZEICHENLISTE

- 1: Anhängerbremsanlage
- 2: Kupplungskopf Vorrat
- 3: Kupplungskopf Bremse
- 4: Kombi-Bremszylinder
- 5: Federspeicher-Feststellbremse
- 6: Betriebsbremse
- 7: Ventilbaugruppe
- 8: Ventilbaugruppe
- 9: Ventileinheit
- 10: Ventileinheit
- 11: Behälter
- 12: Behälter
- 13: Drucksicherungsmodul
- 14: Betätigungsmodul
- 15: Versorgungsanschluss
- 16: Behälteranschluss
- 17: Behälteranschluss
- 18: Anschluss
- 19: Anschluss
- 20: Verzweigung
- 21: Rückschlagventil
- 22: Zweigleitung
- 23: Rückschlagventil
- 24: Zweigleitung
- 25: Überströmventil
- 26: Anschluss
- 27: Anschluss
- 28: Federspeicheranschluss
- 29: Gehäuse
- 30: Ventilkörper
- 31: Bohrung
- 32: Betätigungsachse
- 33: Dichtkante
- 34: Steuerkante
- 35: Steuerkammer
- 36: Betätigungsstößel
- 37: Durchgangsbohrung
- 38: Betätigungsorgan
- 39: Schaltventilkammer
- 40: Entlüftungsanschluss
- 41: Schaltventilkolben
- 42: Federkammer
- 43: Schaltventil-Steuerkammer
- 44: Schaltventilkörper
- 45: Feder
- 46: Stirnseite
- 47: Steuerkammer
- 48: Ausnehmung
- 49: Durchgangsbohrung
- 50: Federspeicheranschluss
- 51: Federspeicher-Bremsanschluss
- 52: Betriebsbremsanschluss
- 53: Versorgungsanschluss
- 54: Bremssteueranschluss
- 55: Schnellentlüftungsventil
- 56: Wechselventil
- 57: EBS-Steuereinheit
- 58: Steueranschluss
- 59: Betriebsbremsleitung
- 60: erster Eingang
- 61: zweiter Eingang
- 62: Zweigleitung
- 63: Ausgang
- 64: Steueranschluss
- 65: Steueranschluss
- 66: Kolbenfläche
- 67: Abstand
- 68: Steuerkammer
- 69: Kolbenfläche
- 70: Magnetventil
- 71: elektrisches Betätigungssignal
- 72: Anschluss

## Patentansprüche

1. Ventilbaugruppe (7) für eine Anhängerbremsanlage (1) eines Nutzfahrzeugs mit
a) einem Versorgungsanschluss (15),
b) einem Federspeicheranschluss (28),
c) einem manuellen Betätigungsorgan (38) und
d) einer in die Ventilbaugruppe (7) integrierten Notbrems- und/oder Abkuppelfunktion, mittels welcher infolge eines drucklosen oder infolge nicht ausreichender Druckluftversorgung des Versorgungsanschlusses (15) automatisch eine Entlüftung des Federspeicheranschlusses (28) herbeiführbar ist,
**dadurch gekennzeichnet, dass**
e) das über ein einziges manuelles Betätigungsorgan (38) ein Ventilkörper (30) sowohl bei druckbeaufschlagtem Versorgungsanschluss (15) als auch bei drucklosem Versorgungsanschluss (15) zur Druckbeaufschlagung des Federspeicheranschlusses (28) in eine erste Ventilstellung und zur Entlüftung des Federspeicheranschlusses (28) in eine zweite Ventilstellung betätigbar ist.

2. Ventilbaugruppe (7) nach Anspruch 1, **dadurch gekennzeichnet, dass** das manuelle Betätigungsorgan (38) bei entlüftetem Versorgungsanschluss (15) mit einer Totmannfunktion ausgestattet ist, welche bei einem Entfall manueller Stellkräfte eine Entlüftung des Federspeicheranschlusses (28) gewährleistet.

3. Ventilbaugruppe (7) nach einem der vorhergehenden Ansprüche, **dadurch gekennzeichnet, dass** ein von dem manuellen Betätigungsorgan (38) betätigter Ventilkörper (30) vorhanden ist, der in einer ersten Ventilstellung den Federspeicheranschluss (28) mit einem Behälteranschluss (16) verbindet und in einer zweiten Ventilstellung den Federspeicheranschluss (28) mit einem Entlüftungsanschluss (40) verbindet.

4. Ventilbaugruppe (7) nach Anspruch 3, **dadurch gekennzeichnet, dass** ein Schaltventilkörper (44) vorhanden ist, welcher in einer ersten Schaltventilstellung keine Stellkraft auf den Ventilkörper (30) ausübt und in einer zweiten Schaltventilstellung den Ventilkörper (30) in Richtung der zweiten Ventilstellung beaufschlagt oder den Ventilkörper (30) in der zweiten Ventilstellung sichert.

5. Ventilbaugruppe (7) nach Anspruch 4, **dadurch gekennzeichnet, dass** in der ersten Schaltventilstellung des Schaltventilkörpers (44) sowohl die erste Ventilstellung des Ventilkörpers (30) als auch die zweite Ventilstellung des Ventilkörpers (30) stabil ist, während in der zweiten Schaltventilstellung des Schaltventilkörpers (44) die zweite Ventilstellung des Ventilkörpers (30) stabil ist und die erste Ventilstellung des Ventilkörpers (30) lediglich eingenommen wird, solange manuelle Betätigungskräfte auf das manuelle Betätigungsorgan (38) ausgeübt werden.

6. Ventilbaugruppe (7) nach Anspruch 4 oder 5, **dadurch gekennzeichnet, dass** der Schaltventilkörper (44) mit einem Notbremskolben, insbesondere einem Schaltventilkolben (41), gebildet ist, der eine Kolbenfläche (66) besitzt, die entgegen der Wirkung einer Feder (45) mit dem Druck an dem Versorgungsanschluss (15) beaufschlagt ist.

7. Ventilbaugruppe (7) nach einem der Ansprüche 3 bis 6, **dadurch gekennzeichnet, dass** der Federspeicheranschluss (28) in der ersten Ventilstellung über ein in Richtung des Federspeicheranschlusses (28) öffnendes Rückschlagventil (23) mit einem Behälteranschluss (16) verbunden ist.

8. Ventilbaugruppe (7) nach einem der vorhergehenden Ansprüche, **dadurch gekennzeichnet, dass** die Ventilbaugruppe (7) als Ventileinheit (9) ausgebildet ist.

9. Ventilbaugruppe (7) nach Anspruch 8, **dadurch gekennzeichnet, dass** die Ventileinheit (9) modular ausgebildet ist.

10. Ventilbaugruppe (7) nach einem der vorherigen Ansprüche, **dadurch gekennzeichnet, dass** das manuelle Betätigungsorgan (38) oder ein von diesem betätigter Ventilkörper (30) über ein elektrisches Betätigungssignal (71) von der oder einer zweiten Ventilstellung, in welcher der Federspeicheranschluss (28) entlüftet ist, in eine oder die erste Ventilstellung, in welcher der Federspeicheranschluss (28) belüftet ist, umschaltbar ist.

11. Ventilbaugruppe (7) nach Anspruch 10, **dadurch gekennzeichnet, dass** das elektrische Betätigungssignal (71) in Abhängigkeit davon erzeugt wird, dass der Anhänger mit einem Zugfahrzeug gekoppelt ist.

12. Ventilbaugruppe (7) nach Anspruch 11, **dadurch gekennzeichnet, dass** das elektrische Betätigungssignal (71) durch einen automatischen Kuppelvorgang zwischen Zugfahrzeug und Anhänger ausgelöst wird.

13. Ventilbaugruppe (7) nach einem der Ansprüche 10 bis 12, **dadurch gekennzeichnet, dass** das manuelle Betätigungsorgan (38) oder der Ventilkörper (30) über einen pneumatischen Steuerdruck von der zweiten Ventilstellung in die erste Ventilstellung umgeschaltet wird, wobei der pneumatische Steuerdruck über ein Magnetventil (70), welches mit dem elektrischen Betätigungssignal (71) beaufschlagt ist, gesteuert wird.

14. Pneumatische Anhängerbremsanlage (1) mit einer Ventilbaugruppe (7) nach einem der Ansprüche 1 bis 13, **dadurch gekennzeichnet, dass** ein Wechselventil (56) vorhanden ist, dessen erster Eingang (60) mit dem Federspeicheranschluss (28) verbunden ist, dessen zweiter Eingang (61) mit einer Betriebsbremsleitung (59) verbunden ist und dessen Ausgang (63) die Beaufschlagung einer Federspeicher-Feststellbremse (5) steuert.

15. Anhängerbremsanlage (1) nach Anspruch 14, **dadurch gekennzeichnet, dass** der Ausgang (63) des Wechselventils (56) über ein Schnellentlüftungsventil (55) mit der Federspeicher-Feststellbremse (5) verbunden ist.

16. Anhängerbremsanlage (1) nach Anspruch 14 oder 15, **dadurch gekennzeichnet, dass** ein Bremssteuergerät (57), das Wechselventil (56) und/oder das Schnellentlüftungsventil (55) eine Ventileinheit (10) bilden.

## Claims

1. Valve assembly (7) for a trailer brake system (1) of a utility vehicle with
a) a supply port (15),
b) a spring brake port (28),
c) a manual actuation means (38) and
d) an emergency brake function and/or a decoupling function integrated into the valve assembly (7) wherein by means of the emergency brake function and/or the decoupling function it is possible to automatically cause a de-aeration of the spring brake port (28) if the supply port (15) is pressureless or if the supply port (15) is not sufficiently supplied with pressurized air,
**characterised by**
e) a valve body (30) being actuatable by one single manual actuation means (38) into a first valve position for pressurizing the spring brake port (28) and into a second valve position for de-aerating the spring brake port (28) which is possible both for pressure biased supply port (15) as well as for pressureless supply port (15).

2. Valve assembly (7) of claim 1 **wherein** the manual actuation means (38) is provided with a dead man function for de-aerated supply port (15) wherein the dead man function provides a de-aerating of the spring brake port (28) with a removal of manual actuating forces.

3. Valve assembly (7) of claim 1 or 2 **wherein** a valve body (30) actuated by the manual actuation means (38) is provided which in a first valve position connects the spring brake port (28) with a reservoir port (16) and in a second valve position connects the spring brake port (28) with a de-aerating port (40).

4. Valve assembly (7) of claim 3 **wherein** a switching valve body (44) is provided which in a first switching valve position does not apply an actuating force upon the valve body (30) and in a second switching valve position biases the valve body (30) towards the second valve position or secures the valve body (30) in the second valve position.

5. Valve assembly (7) of claim 4 **wherein** in the first switching valve position of the switching valve body (44) both the first valve position of the valve body (30) as well as the second valve position of the valve body (30) are stable whereas in the second switching valve position of the switching valve body (44) the second valve position of the valve body (30) is stable and it is only possible that the first valve position of the valve body (30) is taken as long as manual actuating forces are applied upon the manual actuation means (38).

6. Valve assembly (7) of claim 4 or 5 **wherein** the switching valve body (44) is built with an emergency brake piston, in particular a switching valve piston (41) which comprises a piston surface (66) which is biased with the pressure at the supply port (15) against the bias of a spring (45).

7. Valve assembly (7) of one of claims 3 to 6 **wherein** the spring brake port (28) in the first valve position is connected with a reservoir port (16) via a check valve (23) opening towards the spring brake port (28).

8. Valve assembly (7) of one of claims 1 to 7 **wherein** the valve assembly (7) is formed by a valve unit (9).

9. Valve assembly (7) of claim 8 **wherein** the valve unit (9) has a modular design.

10. Valve assembly (7) of one of claims 1 to 9 **wherein** the manual actuation means (38) or a valve body (30) actuated by the manual actuation means (38) is switchable by an electrical actuation signal (71) from the or a second valve position in which the spring brake port (28) is de-aerated into a or the first valve position in which the spring brake port (28) is aerated.

11. Valve assembly (7) of claim 10 **wherein** the electrical actuation signal (71) is produced dependent from the trailer being coupled with a tractor.

12. Valve assembly (7) of claim 11 **wherein** the electrical actuation signal (71) is triggered by an automatic coupling process between a tractor and a trailer.

13. Valve assembly (7) of one of claims 10 to 12 **wherein** the manual actuation means (38) or the valve body (30) is switched by a pneumatic control pressure from the second valve position into the first valve position wherein the pneumatic control pressure is controlled by a solenoid valve (70) which is biased by the electrical actuation signal (71).

14. Pneumatical trailer brake system (1) with a valve assembly (7) of one of claims 1 to 13 **wherein** a shuttle valve (56) is provided, a first input (60) of the shuttle valve (56) being connected with the spring brake port (28), a second input (61) of the shuttle valve (56) being connected with a service brake line (59) and the output (63) of the shuttle valve (56) controlling the bias of the spring brake (5).

15. Trailer brake system (1) of claim 14 **wherein** the output (63) of the shuttle valve (56) is connected with the spring brake (5) via a quick release valve (55).

16. Trailer brake system (1) of claim 14 or 15 **wherein** a brake control device (57), the shuttle valve (56) and/or the quick release valve (55) build a valve unit (10).

## Revendications

1. Composant de soupape (7) pour une installation de freinage d'une remorque (1) d'un véhicule utilitaire ayant :
a) un raccordement d'alimentation (15),
b) un raccordement d'accumulateur à ressort (28),
c) un organe d'actionnement manuel (38), et
d) une fonction de freinage d'urgence et/ou de découplage intégrée dans le composant de soupape (7) au moyen de laquelle une mise à l'air du raccordement d'accumulateur à ressort (28) peut être provoquée automatiquement à la suite d'une perte de pression ou à la suite d'une alimentation en air comprimé insuffisante dans le raccordement d'alimentation (15),
**caractérisé**
e) **en ce qu'**au moyen d'un seul organe d'actionnement manuel (38), un corps de soupape (30) peut être actionné, aussi bien lorsque le raccordement d'alimentation (15) est pressurisé que lorsqu'il n'y a pas de pression dans le raccordement d'alimentation (15), dans une première position de soupape pour pressuriser le raccordement d'accumulateur à ressort (28) et dans une deuxième position de soupape pour mettre à l'air le raccordement d'accumulateur à ressort (28).

2. Composant de soupape (7) selon la revendication 1, **caractérisé en ce que** l'organe d'actionnement manuel (38) est doté, lorsque le raccordement d'alimentation (15) est mis à l'air, d'une fonction d'homme mort qui garantit une mise à l'air du raccordement d'accumulateur à ressort (28) en cas d'absence de force de réglage manuelle.

3. Composant de soupape (7) selon l'une des revendications précédentes, **caractérisé en ce qu'**il est prévu un corps de soupape (30) actionné par l'organe d'actionnement manuel (38) qui, dans une première position de soupape, relie le raccordement d'accumulateur à ressort (28) avec un raccordement de réservoir (16) et, dans une deuxième position de soupape, relie le raccordement d'accumulateur à ressort (28) avec un raccordement de mise à l'air (40).

4. Composant de soupape (7) selon la revendication 3, **caractérisé en ce qu'**il est prévu un corps de soupape de commutation (44) qui, dans une première position de soupape de commutation, n'exerce aucune force de réglage sur le corps de soupape (30) et, dans une deuxième position de soupape de commutation, agit sur le corps de soupape (30) pour l'entraîner dans la direction de la deuxième position de soupape ou sécurise le corps de soupape (30) dans la deuxième position de soupape.

5. Composant de soupape (7) selon la revendication 4, **caractérisé en ce que** dans la première position de soupape de commutation du corps de soupape de commutation (44), à la fois la première position de soupape du corps de soupape (30) et la deuxième position de soupape du corps de soupape (30) sont stables, tandis que dans la deuxième position de soupape de commutation du corps de soupape de commutation (44), la deuxième position de soupape du corps de soupape (30) est stable et la première position de soupape du corps de soupape (30) est seulement maintenue aussi longtemps que des forces d'actionnement manuelles sont exercées sur l'organe d'actionnement manuel (38).

6. Composant de soupape (7) selon la revendication 4 ou 5, **caractérisé en ce que** le corps de soupape de commutation (44) est réalisé avec un piston de freinage d'urgence, en particulier un piston de soupape de commutation (41), qui possède une surface de piston (66) sur laquelle la pression présente dans le raccordement d'alimentation (15) agit à l'opposé de l'action d'un ressort (45).

7. Composant de soupape (7) selon l'une des revendications 3 à 6, **caractérisé en ce que** dans la première position de soupape, le raccordement d'accumulateur à ressort (28) est relié avec un raccordement de réservoir (16) par le biais d'une soupape antiretour (23) s'ouvrant dans la direction du raccordement d'accumulateur à ressort (28).

8. Composant de soupape (7) selon l'une des revendications précédentes, **caractérisé en ce que** le composant de soupape (7) est réalisé comme unité de soupape (9).

9. Composant de soupape (7) selon la revendication 8, **caractérisé en ce que** l'unité de soupape (9) est réalisée de façon modulaire.

10. Composant de soupape (7) selon l'une des revendications précédentes, **caractérisé en ce que** l'organe d'actionnement manuel (38) ou un corps de soupape (30) actionné par celui-ci peut être commuté, au moyen d'un signal d'actionnement électrique (71), depuis la position ou une deuxième position de soupape dans laquelle le raccordement d'accumulateur à ressort (28) est mis à l'air vers une position ou la première position de soupape dans laquelle le raccordement d'accumulateur à ressort (28) est soumis à l'effet de l'air.

11. Composant de soupape (7) selon la revendication 10, **caractérisé en ce que** le signal d'actionnement électrique (71) est émis à la condition que la remorque soit couplée à un véhicule de traction.

12. Composant de soupape (7) selon la revendication 11, **caractérisé en ce que** le signal d'actionnement électrique (71) est déclenché par le biais d'un processus de couplage automatique entre le véhicule de traction et la remorque.

13. Composant de soupape (7) selon l'une des revendications 10 à 12, **caractérisé en ce que** l'organe d'actionnement manuel (38) ou le corps de soupape (30) est commuté depuis la deuxième position de soupape vers la première position de soupape au moyen d'une pression de commande pneumatique, la pression de commande pneumatique étant commandée par le biais d'une électrovanne (70) sur laquelle agit le signal d'actionnement électrique (71).

14. Installation de freinage pneumatique d'une remorque (1) ayant un composant de soupape (7) selon l'une des revendications 1 à 3, **caractérisée en ce qu'**il est prévu un sélecteur de circuit (56) dont la première entrée (60) est reliée avec le raccordement d'accumulateur de ressort (28), dont la deuxième entrée (61) est reliée avec une conduite de freinage de service (59) et dont la sortie (63) commande la sollicitation d'un frein de stationnement à accumulateur à ressort (5).

15. Installation de freinage d'une remorque (1) selon la revendication 14, **caractérisée en ce que** la sortie (63) du sélecteur de circuit (56) est reliée avec le frein de stationnement à accumulateur à ressort (5) par le biais d'une soupape d'échappement rapide (55).

16. Installation de freinage d'une remorque (1) selon la revendication 14 ou 15, **caractérisée en ce qu'**un appareil de commande de freinage (57), le sélecteur de circuit (56) et/ou la soupape d'échappement rapide (55) forment une unité de soupape (10).
